(19) Europäisches Patentamt
European Patent Office
Office européen des brevets

(11) **EP 4 723 713 A1**

(12) **EUROPEAN PATENT APPLICATION**
published in accordance with Art. 153(4) EPC

(43) Date of publication:
**08.04.2026 Bulletin 2026/15**

(21) Application number: **23940030.2**

(22) Date of filing: **04.06.2023**

(51) International Patent Classification (IPC):
*H04W 16/28* $^{(2009.01)}$

(52) Cooperative Patent Classification (CPC):
**H04W 16/28**

(86) International application number:
**PCT/CN2023/098185**

(87) International publication number:
**WO 2024/250128 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• **ZHAO, Zheng
  Shanghai 201601 (CN)**
• **LYU, Ling
  Shanghai 201601 (CN)**
• **YANG, Zhongzhi
  Shanghai 201601 (CN)**

(74) Representative: **Fish & Richardson P.C.
Highlight Business Towers
Mies-van-der-Rohe-Straße 8
80807 München (DE)**

(54) **METHOD AND APPARATUS FOR WIRELESS COMMUNICATION**

(57) The present disclosure provides a method and apparatus for wireless communication, which is conducive to improving the efficiency of beam sweeping for the plurality of cells by the terminal device, completing rapid beam pairing, and reducing power consumption. The method includes: receiving, by a terminal device, first information sent by a network device, where the network device corresponds to a serving cell of the terminal device, and the first information is used for the terminal device to determine a beam direction of one or both of a first transmit beam and a first receive beam on a first time unit; where the first information includes at least one of: whether transmit beam sweeping performed by a first neighbor cell is synchronized with transmit beam sweeping performed by the serving cell; an offset value of the transmit beam sweeping performed by the first neighbor cell relative to the transmit beam sweeping performed by the serving cell; and beam directions and sending times of a plurality of transmit beams corresponding to one or both of the serving cell and the first neighbor cell.

FIG. 4

Processed by Luminess, 75001 PARIS (FR)

**Description**

**TECHNICAL FIELD**

The present disclosure relates to the field of communication technology, and more specifically to a method and apparatus for wireless communication.

**BACKGROUND**

With the development of communication technology, a network device can perform beam sweeping based on large-scale antenna arrays to ensure system coverage. Furthermore, a terminal device also supports antenna arrays. Therefore, in order to generate best transmit and receive beam pairs, it is necessary to comprehensively consider transmit beams and receive beams during a beam alignment process.

In related technologies, when the terminal device performs beam sweeping for a serving cell and a plurality of neighbor cells, it is necessary to consider each transmit beam for each cell, resulting in longer beam sweeping times and higher power consumption.

**SUMMARY**

The present disclosure provides a method and apparatus for wireless communication. The following describes various aspects involved in the embodiments of the present disclosure.

According to a first aspect, a method for wireless communication is provided, including: receiving, by a terminal device, first information sent by a network device, where the network device corresponds to a serving cell of the terminal device, and the first information is used for the terminal device to determine a beam direction of one or both of a first transmit beam and a first receive beam on a first time unit; where the first information includes at least one of: whether transmit beam sweeping performed by a first neighbor cell is synchronized with transmit beam sweeping performed by the serving cell; an offset value of the transmit beam sweeping performed by the first neighbor cell relative to the transmit beam sweeping performed by the serving cell; and beam directions and sending times of a plurality of transmit beams corresponding to one or both of the serving cell and the first neighbor cell.

According to a second aspect, a method for wireless communication is provided, including: sending, by a network device, first information to a terminal device, where the network device corresponds to a serving cell of the terminal device, and the first information is used for the terminal device to determine a beam direction of one or both of a first transmit beam and a first receive beam on a first time unit; where the first information includes at least one of: whether transmit beam sweeping performed by a first neighbor cell is synchronized with transmit beam sweeping performed by the serving cell; an offset value of the transmit beam sweeping performed by the first neighbor cell relative to the transmit beam sweeping performed by the serving cell; and beam directions and sending times of a plurality of transmit beams corresponding to one or both of the serving cell and the first neighbor cell.

According to a third aspect, an apparatus for wireless communication is provided, where the apparatus is a terminal device, and the terminal device includes: a receiving unit, configured to receive first information sent by a network device, where the network device corresponds to a serving cell of the terminal device, and the first information is used for the terminal device to determine a beam direction of one or both of a first transmit beam and a first receive beam on a first time unit; where the first information includes at least one of: whether transmit beam sweeping performed by a first neighbor cell is synchronized with transmit beam sweeping performed by the serving cell; an offset value of the transmit beam sweeping performed by the first neighbor cell relative to the transmit beam sweeping performed by the serving cell; and beam directions and sending times of a plurality of transmit beams corresponding to one or both of the serving cell and the first neighbor cell.

According to a fourth aspect, an apparatus for wireless communication is provided, where the apparatus is a network device, and the network device includes: a sending unit, configured to send first information to a terminal device, where the network device corresponds to a serving cell of the terminal device, and the first information is used for the terminal device to determine a beam direction of one or both of a first transmit beam and a first receive beam on a first time unit; where the first information includes at least one of: whether transmit beam sweeping performed by a first neighbor cell is synchronized with transmit beam sweeping performed by the serving cell; an offset value of the transmit beam sweeping performed by the first neighbor cell relative to the transmit beam sweeping performed by the serving cell; and beam directions and sending times of a plurality of transmit beams corresponding to one or both of the serving cell and the first neighbor cell.

According to a fifth aspect, an apparatus for communication is provided, including a memory and a processor, where the memory is configured to store a program, and the processor is configured to invoke the program in the memory to perform the method according to the first aspect or the second aspect.

According to a sixth aspect, an apparatus is provided, including a processor, where the processor is configured to invoke a program from a memory to perform the method according to the first aspect or the second aspect.

According to a seventh aspect, a chip is provided, including a processor, where the processor is configured to invoke a program from a memory to cause a device on which the chip is installed to perform the method according to the first aspect or the second aspect.

According to an eighth aspect, a computer-readable storage medium storing a program is provided, where the program causes a computer to perform the method according to the first aspect or the second aspect.

According to a ninth aspect, a computer program product is provided, including a program, where the program causes a computer to perform the method according to the first aspect or the second aspect.

According to a tenth aspect, a computer program is provided, where the computer program causes a computer to perform the method according to the first aspect or the second aspect.

In the embodiments of the present disclosure, the terminal device determines, based on the first information, the beam direction and the sending time for transmit beam sweeping performed by the serving cell and/or the first neighbor cell. According to this information, the terminal device determines the beam direction of the receive beam and/or the transmit beam on the first time unit when the serving cell and the neighbor cell perform the beam sweeping. It is seen therefrom that the terminal device can quickly complete beam alignment with the serving cell or the first neighbor cell, which is conducive to improving beam sweeping efficiency and reducing power consumption.

## BRIEF DESCRIPTION OF THE DRAWINGS

FIG. 1 is a wireless communication system applied in an embodiment of the present disclosure.

FIG. 2 is a schematic flowchart of transmit beam sweeping and receive beam sweeping of an SSB.

FIG. 3 is a schematic diagram of beam alignment in the related technology.

FIG. 4 is a schematic flowchart of a method for wireless communication according to an embodiment of the present disclosure.

FIG. 5 is a schematic diagram of a possible implementation of the method shown in FIG. 4.

FIG. 6 is a schematic structural diagram of an apparatus for wireless communication according to an embodiment of the present disclosure.

FIG. 7 is another schematic structural diagram of an apparatus for wireless communication according to an embodiment of the present disclosure.

FIG. 8 is a schematic structural diagram of an apparatus for communication according to an embodiment of the present disclosure.

## DETAILED DESCRIPTION OF THE EMBODIMENTS

The following describes technical solutions in the embodiments of the present disclosure with reference to the accompanying drawings in the embodiments of the present disclosure. Apparently, the described embodiments are part of but not all of the embodiments of the present disclosure. For the embodiments of the present disclosure, all other embodiments obtained by a person of ordinary skill in the art based on the embodiments of the present disclosure without creative efforts shall fall within the protection scope of the present disclosure.

The embodiments of the present disclosure may be applied to various communication systems. For example, the embodiments of the present disclosure may be applied to a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (NTN-U) system, an NR-based access to unlicensed spectrum (NR-U) system, an NTN system, a universal mobile telecommunication system (UMTS), a wireless local area networks (WLAN), a wireless fidelity (WiFi), and a 5th-generation (5G) system. The embodiments of the present disclosure may be further applied to another communication system such as a future communication system. The future communication system may be, for example, a 6th-generation (6G) mobile commu-

nication system, or a satellite communication system, etc.

Conventional communication systems support a limited number of connections and are easy to implement. However, with the development of communication technologies, the communication system may not only support conventional cellular communication, but also support one or more other types of communication. For example, the communication system may support one or more of device to device (D2D) communication, machine to machine (M2M) communication, machine type communication (MTC), enhanced MTC communication (eMTC), vehicle to vehicle (V2V) communication, vehicle to everything (V2X) communication, and the like. The embodiments of the present disclosure may also be applied to communication systems supporting the above communication types.

The communication system in the embodiments of the present disclosure may be applied to a carrier aggregation (CA) scenario, a dual connectivity (DC) scenario, or a standalone (SA) fabric scenario.

The communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a dedicated spectrum.

The embodiments of the present disclosure may be applied to a terrestrial network (TN) system or may be applied to a non-terrestrial network (NTN) system. As an example, the NTN system may include a 4G-based NTN system, an NR-based NTN system, an internet of things (IoT)-based NTN system, and a narrow band internet of things (NB-IoT)-based NTN system.

The communication system may include one or more terminal devices. The terminal device mentioned in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, a user apparatus, or the like.

In some embodiments, the terminal device may be a STATION (ST) in the WLAN. In some embodiments, the terminal device may be a cellular phone, a cordless phone, a session initiation protocol (SIP) phone, a wireless local loop (WLL) station, a personal digital assistant (PDA) device, a handheld device having a wireless communication function, a computing device or another possessing device connected to a wireless modem, a vehicle-mounted device, a wearable device, a terminal in a next-generation communication system (such as the NR system), or a terminal device in a future evolved public land mobile network (PLMN) network.

In some embodiments, the terminal device may be a device that provides voice and/or data connectivity to a user. For example, the terminal device may be a handheld device or a vehicle-mounted device having a wireless connection function. As some specific examples, the terminal device may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc.

In some embodiments, the terminal device may be deployed on land. For example, the terminal device may be deployed indoors or outdoors. In some embodiments, the terminal device may be deployed on a water surface, for example, deployed on a ship. In some embodiments, the terminal device may be deployed in the air, for example, deployed on an aircraft, a balloon, and a satellite.

In addition to the terminal device, the communication system may further include one or more network devices. The network device in the embodiments of the present disclosure may be a device configured to communicate with the terminal device, and the network device may also be referred to as an access network device or a radio access network device. The network device may be, for example, a base station. The network device in the embodiments of the present disclosure may refer to a radio access network (RAN) node (or device) that accesses the terminal device to a wireless network. The base station may broadly cover various names as follows, or may be replaced with the following names, such as a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may further refer to a communication module, a modem, or a chip disposed in the foregoing device or apparatus. The base station may also be a mobile switching center and a device that undertakes a function of the base station in D2D, V2X, M2M communication, a network side device in the 6G network, a device that undertakes a function of the base station in a future communication system, etc. The base station may support networks of the same or different access technologies. A specific technology adopted by the network device and a specific form of the device are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may be a CU or a DU, or the network device includes a CU and a DU. The gNB may also include AAU.

As an example, and not limitation, the network device in the embodiments of the present disclosure may have a mobility characteristic, for example, the network device may be a mobile device. In some embodiments of the present disclosure, the network device may be a satellite or a balloon station. In some embodiments of the present disclosure, the network device may be a base station disposed at a location such as land, water. etc.

In the embodiments of the present disclosure, the network device may provide services for a cell, and the terminal device communicates with the network device via a transmission resource (e.g., a frequency domain resource, or a spectrum resource) used by the cell. The cell may be a cell corresponding to the network device (e.g., a base station), and the cell may belong to a macro base station or a base station corresponding to a small cell. The small cell may include a metro cell, a micro cell, a pico cell, a femto cell, etc., and these small cells have the characteristics of a small coverage and a low transmission power, which are suitable for providing a high-rate data transmission service.

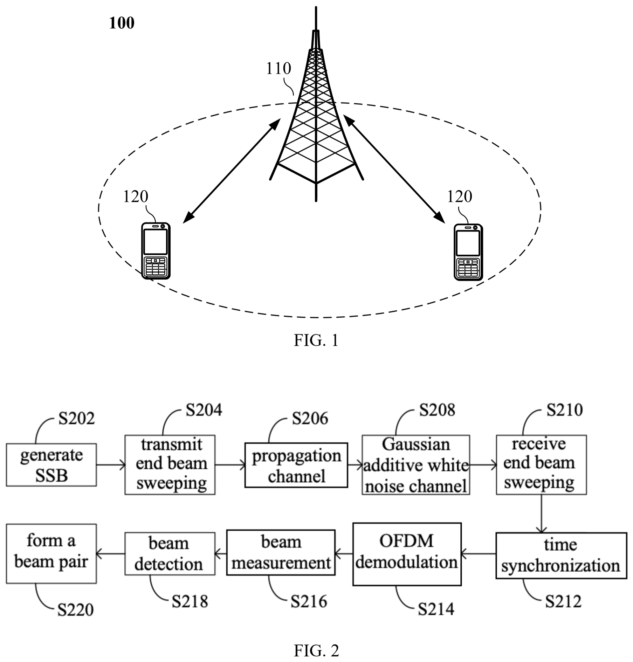

For example, FIG. 1 is a schematic architectural diagram of a communication system according to an embodiment of the present disclosure. As shown in FIG. 1, the communication system 100 may include a network device 110, and the network device 110 may be a device that communicates with a terminal device 120 (or referred to as a communication terminal or a terminal). The network device 110 may provide communication coverage for a particular geographic area and may communicate with a terminal device located within the coverage area.

FIG. 1 exemplarily shows a network device and two terminal devices. In some embodiments of the present disclosure, the communication system 100 may include a plurality of network devices, and the coverage of each network device may include other numbers of terminal devices, which is not limited in the embodiments of the present disclosure.

In the embodiments of the present disclosure, the wireless communication system shown in FIG. 1 may further include another network entity such as a mobility management entity (MME), an access and mobility management function (AMF), etc., which is not limited in the embodiments of the present disclosure.

It should be understood that a device having a communication function in the network/system in the embodiments of the present disclosure may be referred to as a communication device. Taking the communication system 100 shown in FIG. 1 as an example, the communication device may include the network device 110 and the terminal device 120 having the communication function, and the network device 110 and the terminal device 120 may be the specific devices described above and are not described here again. The communication device may further include another device in the communication system 100, e.g., another network entity such as a network controller, a mobility management entity, etc., which is not limited in the embodiments of the present disclosure.

For ease of understanding, some related technical knowledge in the embodiments of the present disclosure is first described. The following related technologies may be arbitrarily combined with the technical solutions of the embodiments of the present disclosure as an optional solution, which all belong to the protection scope of the embodiments of the present disclosure. The embodiments of the present disclosure include at least some of the following content.

With the development of wireless communication technology, frequency band resources are becoming increasingly scarce. For example, low-frequency band resources are becoming increasingly limited, and the millimeter-wave frequency band has become an important frequency band for future applications in mobile communication systems. The millimeter-wave frequency band typically employs large-scale antenna arrays to form beamformed beams with greater gain. For example, 5G network devices can support large-scale antenna arrays, with the number of configurable antennas potentially reaching up to 1024.

To fully leverage the potential of large-scale antenna arrays, corresponding beamforming technologies are required to focus the capability of wireless signals. Through beamforming technology, directional beams are formed to overcome propagation losses. In some embodiments, due to hardware lacking the capability of digital beamforming, spatial beams are realized in 5G through analog beamforming. For example, in millimeter-wave antenna arrays, the shorter wavelength and limited size, along with considerations of hardware complexity, cost overhead, and power consumption, make it infeasible to adopt digital beamforming approaches used in low-frequency bands. In some embodiments, a hybrid beamforming approach that combines analog beams with limited digital ports may involve a compromise between the flexibility of digital beamforming and the low complexity of analog beamforming.

Based on beamforming technology, the network device may utilize a plurality of beams with different directions to fully cover a cell, ensuring system coverage. To generate the plurality of beams, the network device sequentially transmits wireless signals using beams with different directions during a downlink process. The process of sequentially transmitting the plurality of beams with different directions is referred to as beam sweeping. During transmit beam sweeping, the terminal device may measure wireless signals transmitted by different beams, this process referred to as beam measurement. Based on a result of the beam measurement, the terminal device may report relevant information to the network device, i.e., beam reporting. The network device may make beam determination based on the report from the terminal device to determine a best transmit beam aligned with the terminal device.

Furthermore, the terminal device may also support antenna arrays and perform beam sweeping. In the process of beam alignment, both the transmit beam and the receive beam should be considered. For example, receive beam sweeping refers to the terminal device transforming different receive beams in response to the transmit beam and selecting the best receive beam, thereby generating a pair of best transmit-receive beams. A pair of transmit-receive beams may also be referred to as a transmit and receive beam pair.

As an example, the network device may sequentially use beams with different directions to transmit wireless signals during the downlink process, which is known as transmit beam sweeping. The terminal device may measure the wireless signals transmitted by the same beam using different beam directions. The terminal device may report relevant information to the network device after completing the detection of all transmit beams according to this process. The network device may determine a best transmit and receive beam pair aligned with the user based on the report from the terminal device.

For ease of understanding, the following describes a process of generating the transmit and receive beam pair using the transmit beam sweeping and receive beam sweeping process of a synchronization signal block (SSB) as an example, with reference to FIG. 2. The present disclosure is not limited to SSB.

Referring to FIG. 2, at operation S202, a transmit end generates the SSB. The SSB generated by the transmit end (e.g., gNB) may be transmitted. At operation S204, the transmit end performs beam sweeping. Based on the SSB, the transmit end may generate a plurality of beams with different directions through beamforming techniques and perform transmit beam sweeping. At operations S206 and S208, transmit beams arrive at a receive end through propagation channels and Gaussian additive white noise channels. At operation S210, the receive end (e.g., terminal device) performs beam sweeping. The receive end may perform the beam sweeping via a plurality of receive beams. At operation S212, the receive end and the transmit end perform time synchronization for beam measurement. At operation S214, the receive end performs orthogonal frequency division multiplex (OFDM) demodulation on signals in the received SSB. At operation S216, the receive end performs beam measurement. The measurement performed on the SSB may include detection of a primary synchronization signal (PSS). At operation S218, beam detection is performed. The receive end may report a beam measurement result. The transmit end may perform the beam detection based on the result to determine a beam pair. At operation S220, the beam pair is formed. The beam pair is typically the best transmit and receive beam pair and will be used for subsequent link transmission.

In the process shown in FIG. 2, to achieve transmit beam sweeping, the transmit end may use analog beamforming techniques to perform beamforming for each SSB in the generated pulse. Based on the number of SSBs in the pulse and a specified sweeping range, azimuths and elevation directions of different beams are determined, and each pulse in these directions is formed into a beam. The transmit end may transmit the beamformed pulse waveform over a spatial scattering channel. For the receive end's beam sweeping, the transmitted beamformed pulse waveform is received sequentially on each receive beam. For example, for N transmit beams and M receive beams, each of the N beams is transmitted M times from the network device, allowing each transmit beam to be received via M receive beams.

That is to say, when the receive end is a terminal device, the terminal device needs to continuously change the beam direction during the receive beam sweeping to subsequently form the beam pair.

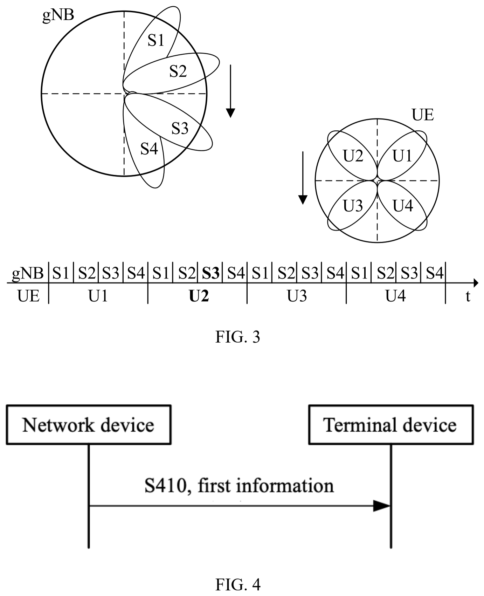

The following describes the process of generating the best transmit and receive beam pair with reference to FIG. 3 still taking the transmit beam sweeping and receive beam sweeping of the SSB as an example. In the azimuth plane shown in FIG. 3, it is assumed that the network device (gNB) performs transmit beam sweeping while the terminal device (UE) performs receive beam sweeping. The gNB has 4 transmit beams, and the UE has 4 receive beams, which means N=M=4.

Referring to FIG. 3, the 4 transmit beams of the gNB are S1, S2, S3, and S4, while the 4 receive beams of the UE are U1, U2, U3, and U4. The gNB performs beam sweeping of the 4 transmit beams in a clockwise direction, while the UE performs beam sweeping of the 4 receive beams in a counterclockwise direction.

The timeline at the bottom of FIG. 3 shows the time spent by the gNB and UE on sweeping based on beams. On the timeline of FIG. 3, the interval for each transmit beam at the gNB corresponds to the SSB, and the interval for each receive beam at the UE corresponds to the synchronization signal (SS) pulse. As shown in FIG. 3, to determine the best transmit and receive beam pair, the gNB's 4 transmit beams each transmit 4 times for the 4 receive beams of the UE. In the scenario shown in FIG. 3, beams S3 and U2 in bold font are conceptually selected as a beam pair link.

From FIG. 2 and FIG. 3, it may be seen that in related technologies, when the terminal device performs beam sweeping for the cell, it needs to generate receive beams with different directions at different times for each transmit beam. Furthermore, the terminal device needs to detect each transmit beam based on each receive beam, which is time-consuming and power-intensive. For example, the beam sweeping in FIG. 3 requires 16 SSB cycles, and the complexity of detecting the PSS in the SSB is relatively high, with frequent SSB blind detection consuming significant power.

When the terminal device performs cell handover or cell reselection, it may need to perform beam sweeping for a plurality of neighbor cells. The terminal device needs to perform receive beam sweeping as shown in FIG. 3 and corresponding detection for a plurality of transmit beams of each neighbor cell, to be used for cell handover or cell reselection. The efficiency of beam sweeping for the plurality of neighbor cells is relatively low, and both sweeping and detection lead to significant power consumption for the terminal device.

It should be noted that the issue of high-power consumption caused by the terminal device performing beam sweeping for the plurality of neighbor cells during cell handover or cell reselection is merely an example. The embodiments of the present disclosure may be applied to any type of communication scenario where the terminal device performs beam sweeping for the plurality of cells.

Based on this, an embodiment of the present disclosure provides a method for wireless communication. In this method, the terminal device may determine a first transmit beam corresponding to a first neighbor cell and the terminal device based on first information, thereby enabling faster beam pairing during neighbor cell beam sweeping and improving the efficiency of the neighbor cell beam sweeping. For ease of understanding, the following describes the method provided in the embodiments of the present disclosure in detail in conjunction with FIG. 4.

FIG. 4 is written from the perspective of interaction between the network device and the terminal device. The terminal device and the network device may be any type of terminal device and any type of network device that communicate with each other, which is not limited herein.

In some embodiments, the terminal device may be a user in an IoT system, and the network device may be a base station in the IoT system. In the IoT system, the terminal device may remain in a non-access state for a relatively long time. In some embodiments, the terminal device may be a communication device that supports an antenna array. The terminal device may perform analog beamforming based on the antenna array and perform beam sweeping based on the plurality of generated beams. For example, the terminal device may perform receive beam sweeping to determine a best transmit beam of the network device and receive signals based on this transmit beam. For another example, the terminal device may perform transmit beam sweeping to communicate with the network device.

The network device may correspond to a serving cell of the terminal device. In other words, the network device may be various communication devices related to the serving cell of the terminal device. In some embodiments, the network device may provide service for the serving cell where the terminal device is located. For example, the serving cell of the terminal device may be a cell or a small cell, and the network device provides service for these cells. For another example, the network device may provide communication services for a plurality of IoT terminal devices within the serving cell. In some embodiments, the network device may be the serving cell itself. In some embodiments, the network device may be other devices on a network side corresponding to the serving cell, such as relevant devices in a core network. In some embodiments, the network device may also be devices such as TRPs within the serving cell.

Referring to FIG. 4, at operation S410, the terminal device receives first information sent by the network device. The first information is used for the terminal device to determine a beam direction of a first transmit beam and/or a first receive beam on a first time unit.

From the perspective of the terminal receiving, the terminal device obtains beam direction information of the signal sent by the serving cell or neighbor cells at each time. Only the beam corresponding to that direction may receive the signal. To be able to receive the signal, when the terminal device receives using a directional beam, it needs to satisfy two conditions: one is that the terminal device is within a coverage area of the transmit beam, and the other is that the receive beam of the terminal device should point towards an arriving beam. Generally, a direction of the arriving beam is described from a receiving perspective, while a direction of the transmit beam is described from a transmitting side. Considering the case of direct waves, the arriving beam and transmit beam differ by 180 degrees. Due to factors such as refraction and reflection, the arriving beam and transmit beam may differ, but they may have similar directions, meaning the receive beam of the terminal device should point towards the transmit beam. Regardless of whether the terminal device is within the coverage area of the transmit beam, the terminal device should use a beam with a direction similar to the direction of the transmit beam for reception if the transmit beam at that time is known. If the terminal device is within the coverage area of the transmit beam, the transmit beam may be received; otherwise, the transmit beam cannot be received.

The first time unit refers to a time unit during which the terminal device sends a signal through the first transmit beam or receives a signal through the first receive beam. In some embodiments, the first time unit may be determined based on periods of transmit beams of the serving cell or the plurality of neighbor cells corresponding to the terminal device. In some embodiments, the first time unit may be determined based on the capability of the terminal device to send or receive beams. In some embodiments, the first time unit may be determined according to protocol specifications.

In some embodiments, the first time unit may be one or more time slots or one or more symbols. For example, the first time unit may be one time slot that consists of a plurality of symbols. For another example, the first time unit may be a plurality of symbols excluding one time slot. Exemplarily, the number of symbols corresponding to the first time unit may be equal to the number of symbols corresponding to half a time slot.

In some embodiments, the first time unit may correspond to a sending period of the transmit beam of the network device. For example, when the network device sends a pilot signal using a transmit beam in each time slot, the first time unit may be one time slot.

In some embodiments, the first time unit may correspond to a receiving period of the receive beam of the terminal device. For example, when the network device cyclically send beams, the first time unit may be a period of one complete cycle. In other words, the first time unit may represent a duration during which all transmit beams are sent once. For another example, if the terminal device receives a reference signal using one receive beam in each time slot, the first time unit may be one time slot.

The first transmit beam and the first receive beam may be at least one of: a beam, a physical beam, a logical beam, a spatial filter, a spatial domain filter, a spatial domain transmission filter, a spatial domain reception filter, and an antenna port, which are not limited herein.

The first transmit beam may be one or more beams used by the terminal device to send uplink channels. The transmit beam may also be referred to as the transmit beam mentioned above. The uplink channel and/or uplink signal sent by the terminal device through the first transmit beam may be an uplink data channel, an uplink control channel, or an uplink pilot signal, which is not limited herein.

The first transmit beam is a transmit beam of the first time unit, i.e., the first transmit beam is used to send signals on the first time unit. When the first transmit beam is one of a plurality of transmit beams corresponding to the terminal device, the terminal device may send signals through the plurality of transmit beams on a plurality of time units, respectively.

In some embodiments, the first transmit beam may be aligned with the receive beam of the network device to ensure link transmission. The terminal device may determine a beam direction of the receive beam of the network device on the first time unit based on the first information. Alternatively, the terminal device may determine a beam direction of the first transmit beam based on that beam direction and send uplink signals to the network device using the first transmit beam on the first time unit. The following describes the method for the terminal device to determine the beam direction based on the first information in detail using the first receive beam as an example.

The first receive beam may be a beam used for the terminal device to receive signals. The signals received by the terminal device may come from the serving cell or from the plurality of neighbor cells corresponding to the terminal device. In some embodiments, when the terminal device performs cell reselection or cell selection, the first receive beam may receive SSBs from the plurality of neighbor cells to measure those neighbor cells. In some embodiments, when communication quality between the terminal device and a current serving cell is poor, the first receive beam may receive a pilot signal from the serving cell to switch a communication link with the serving cell, thereby improving communication quality.

For brevity, the following describes the beam alignment between the terminal device and a neighbor cell using any one of the plurality of neighbor cells as an example. Any one of the plurality of neighbor cells may be referred to as a first neighbor cell. The first neighbor cell is used solely for illustration and does not impose limitations on the plurality of neighbor cells corresponding to the terminal device.

The signals received by the first receive beam may be the reference signal and/or downlink channel sent by the serving cell and/or the first neighbor cell. In some embodiments, these reference signals may be pilot signals used for the terminal device to measure the serving cell and/or the first neighbor cell. For example, the first receive beam may receive SSBs. In some embodiments, these reference signals may also be used for the terminal device to synchronize with the first neighbor cell.

The first receive beam may be a single beam or a plurality of beams, which is not limited herein. In some embodiments, when the terminal device determines a transmit beam of the serving cell and/or the first neighbor cell on the first time unit based on the first information, the terminal device may align a corresponding receive beam with this transmit beam. In some embodiments, the terminal device may perform beam sweeping for the first neighbor cell and/or the serving cell via a plurality of receive beams in the first receive beam.

The first receive beam is a receive beam on the first time unit, meaning the first receive beam is used to receive signals on the first time unit. When the first receive beam is one of the plurality of receive beams corresponding to the terminal device, the terminal device may receive signals through the plurality of receive beams on the plurality of time units, respectively.

In some embodiments, the terminal device may perform receive beam sweeping for the serving cell and/or the first neighbor cell using the plurality of receive beams to receive pilot signals sent by the serving cell and/or the first neighbor cell. As a possible implementation, the serving cell and/or the first neighbor cell may send the SSBs using the transmit beam. For example, the serving cell and/or the first neighbor cell may periodically send SSBs using a plurality of transmit beams. These transmit beams may be used to carry SSBs. The terminal device may receive SSBs through the receive beams and measure the serving cell and/or the plurality of neighbor cells.

As mentioned above, the terminal device may determine the beam direction of the first transmit beam and/or the first receive beam based on the first information. The following describes the method for the terminal device to determine the beam direction using the first receive beam as an example. The method for determining the beam direction of the first transmit beam will not be elaborated further.

The first information may be sent through broadcast signaling of the network device. For example, the base station may send the first information to a plurality of terminal devices within the serving cell through broadcast signaling.

In some embodiments, the first information may be carried in a management information base (MIB) or system information block (SIB). In other words, the broadcast signaling may be indicated through MIB or SIB.

The first information may be used to indicate relevant information about the transmit beam of the serving cell or the first neighbor cell. In some embodiments, the first information may indicate beam information sent by the SSBs of the plurality of cells, allowing the terminal device to determine the direction of the receive beam, thereby enabling the terminal device to complete the transmit and receive beam pairing for the SSB through one round of beam sweeping.

The first information may include at least one of the following: whether transmit beam sweeping performed by the first neighbor cell is synchronized with transmit beam sweeping performed by the serving cell; an offset value of the transmit beam sweeping performed by the first neighbor cell relative to the transmit beam sweeping performed by the serving cell; and beam directions and sending times of a plurality of transmit beams corresponding to the serving cell and/or the first neighbor cell.

In some embodiments, the first information is further used for the terminal device to determine the beam directions and sending times of the plurality of transmit beams corresponding to the serving cell and/or the first neighbor cell. The beam directions and sending times of the plurality of transmit beams may represent the correspondence between sending angles and times of each transmit beam or may directly specify the sending angles and times. For example, the first information may indicate the number, starting angles, and angle intervals of transmit beams of the first neighbor cell at different times, allowing the terminal device to determine the beam directions and sending times of the plurality of transmit beams of the first neighbor cell.

As a possible implementation, the beam directions and sending times of the plurality of transmit beams of the serving cell may be determined through communication between the network device and the terminal device. For example, the network device may directly inform the terminal device of specific information regarding the plurality of transmit beams of the serving cell through the first information.

As another possible implementation, the beam directions and sending times of the plurality of transmit beams of the first neighbor cell may be determined based on a indication of the first information. For example, if the first information indicates that the transmit beam sweeping of the first neighbor cell is synchronized with that of the serving cell, the terminal device may infer the beam directions and sending times of one or more transmit beams of the first neighbor cell based on its communication with the serving cell. As an example, the terminal device may obtain the direction of arrival of each transmit beam of the serving cell through direction detection, thereby acquiring the correspondence between the times and directions of arrival. When the first information indicates that the transmit beam sweeping of the first neighbor cell is synchronized with that of the serving cell, the terminal device considers that the correspondence between the times and directions of arrival of the first neighbor cell follows the above correspondence, allowing the terminal device to determine a receive direction based on the direction of arrival and perform reception at the corresponding time. For another example, if the first information explicitly specifies the offset value of the transmit beam sweeping of the first neighbor cell relative to that of the serving cell, the terminal device may determine the beam directions and sending times of one or more transmit beams of the first neighbor cell based on its communication with the serving cell and the offset value. For yet another example, when the first information directly indicates the beam directions and sending times of the plurality of transmit beams corresponding to the first neighbor cell, the terminal device may directly determine the beam information based on the first information.

As an embodiment, after the terminal device determines the beam directions and sending times of the plurality of transmit beams corresponding to the serving cell and/or the first neighbor cell, it may determine the first receive beam based on a beam direction of a transmit beam corresponding to the first time unit among the plurality of transmit beams. The determination of the first receive beam by the terminal device refers to determination of a beam direction and/or sending time of the first receive beam by the terminal device.

For example, a direction of a signal received by each receive beam may differ by 180 degrees from a direction of a signal sent by the transmit beam. That is, when a beam direction of a transmit beam of the serving cell and/or the first neighbor cell on the first time unit is a degrees, a receive direction of the first receive beam is a+180 degrees. For example, if the direction of the transmit beam is 60 degrees counterclockwise relative to the x-axis, then the direction of the receive beam is 240 degrees counterclockwise relative to the x-axis. For another example, if the direction of the transmit beam is 30 degrees counterclockwise relative to the x-axis, then the direction of the receive beam is 150 degrees clockwise relative to the x-axis.

Exemplarily, after the terminal device determines the first receive beam on the first time unit, it may receive signals through the first receive beam on the first time unit. In other words, the terminal device may generate the first receive beam based on the determined beam direction on the first time unit and receive signals through the first receive beam.

In some embodiments, the first information may indicate synchronization between the transmit beam sweeping performed by the first neighbor cell and the transmit beam sweeping performed by the serving cell, and the beam direction of the first receive beam is determined based on the transmit beam of the serving cell on the first time unit. That is, when the first information indicates synchronization between the first neighbor cell and the serving cell, the terminal device may determine information of the first neighbor cell based on the information of the serving cell. Taking the transmit beam carrying the SSB as an example, when the first neighbor cell and the serving cell are synchronized, a periodicity of the SSB of the first neighbor cell may be notified by the serving cell to the terminal device. Since a time offset of the SSB of the first neighbor cell relative to the SSB of the serving cell is 0, the terminal device may obtain an SSB timing of the first neighbor cell based on the serving cell, determine receive beams at each time of the first neighbor cell, and perform the SSB measurement for the first neighbor cell. It should be noted that the first neighbor cell may include a plurality of cells, and determining the receive beams at each time of the first neighbor cell may be determining time and receive beam relationships of the plurality of cells, these relationships being the same. In other words, when the terminal device determines receive beams at corresponding times and performs detection, it may detect SSB signals of the plurality of cells.

As a possible implementation, the synchronization between the transmit beam sweeping performed by the first neighbor cell and the transmit beam sweeping performed by the serving cell may include time synchronization and/or direction synchronization between the transmit beam sweeping performed by the first neighbor cell and the transmit beam sweeping performed by the serving cell.

Time synchronization may refer to the time offset of the transmit beam of the first neighbor cell relative to the transmit beam of the serving cell being 0. For example, if both the first neighbor cell and the serving cell have 4 transmit beams, both first time units correspond to both first transmit beams, both second time units correspond to both second transmit beams, and so on.

Direction synchronization may refer to a direction offset of the transmit beam of the first neighbor cell relative to the transmit beam of the serving cell being 0. That is, an angle of an $i^{th}$ transmit beam of the first neighbor cell is the same as an angle of an $i^{th}$ transmit beam of the serving cell. For example, if both the first neighbor cell and the serving cell have 4 transmit beams, when a direction of a first transmit beam of the first neighbor cell is 30 degrees, a direction of a first transmit beam of the serving cell is also 30 degrees.

Direction synchronization may also indicate that the direction of the beam sweeping performed by the first neighbor cell is the same as the direction of the beam sweeping performed by the serving cell. For example, both the first neighbor cell and the serving cell may perform the transmit beam sweeping in a clockwise direction.

In some embodiments, the first information may include the offset value of the transmit beam sweeping performed by the first neighbor cell relative to the transmit beam sweeping performed by the serving cell, and the beam direction of the first receive beam is determined based on the transmit beam of the serving cell on the first time unit and the offset value. Taking the transmit carrying SSB as an example, when the first neighbor cell is not synchronized with the serving cell, the terminal device needs to perform blind searching for the SSB of the first neighbor cell. When the serving cell notifies the terminal device of the relative offset of the first neighbor cell and an approximate offset of the SSB beam direction (or SSB index offset), the terminal device may determine a direction of a transmit beam of the first neighbor cell in a certain time slot based on this information, and thus use a corresponding receive beam to receive signals in this time slot.

As a possible implementation, the offset value may include a time offset value and/or a direction offset value. In other words, the first information may indicate the time offset value and/or direction offset value of the transmit beam of the first neighbor cell relative to the transmit beam of the serving cell.

In some embodiments, the first information may include the beam directions and sending times of the plurality of transmit beams corresponding to the serving cell and/or the first neighbor cell. Exemplarily, the core network may notify the beam directions and sending times of the transmit beams of the serving cell and/or the first neighbor cell. For example, after receiving the beam directions and sending times of the transmit beams of the serving cell and the first neighbor notified or suggested by the core network, the serving cell and/or the first neighbor cell may provide feedback to the core network indicating that they perform configurations based on the beam directions and sending times of the transmit beams notified or suggested by the core network.

In some embodiments, the first receive beam is one of a plurality of receive beams for the terminal device to perform beam sweeping on the serving cell and/or the first neighbor cell. The number of receive beams of the terminal device may differ from the number of transmit beams of the serving cell and/or the first neighbor cell. For example, the serving cell or the first neighbor cell has 8 transmit beams, but the terminal device may only receive using 4 receive beams due to capability limitations, one receive beam of the terminal device may correspond to two transmit beams of the serving cell or the first neighbor cell.

As mentioned above, the first neighbor cell may be any of the plurality of neighbor cells corresponding to the terminal device, and the first information may be used for the terminal device to determine a plurality of transmit beams corresponding to the plurality of neighbor cells. In some embodiments, the terminal device may determine one or more receive beams corresponding to the plurality of neighbor cells through the plurality of transmit beams. The one or more receive beams are used for the terminal device to perform measurements on the plurality of neighbor cells.

Exemplarily, sweeping directions of the transmit beams of the plurality of neighbor cells may be the same, and the terminal device may determine the beam directions of the plurality of transmit beams of the plurality of neighbor cells on the first time unit. Based on these beam directions of the transmit beams, the terminal device may determine the corresponding one or more receive beams. For example, when the sweeping directions and beam directions of the transmit beams of the plurality of neighbor cells are synchronized with those of the serving cell, one receive beam of the terminal device on the first time unit may correspond to a plurality of transmit beams of the plurality of neighbor cells.

Taking the transmit beam carrying SSB as an example, within a certain region, SSBs of each cell are swept in the same directional order. When the terminal device performs reception detection, it may perform beam sweeping in a reverse direction. Following this order ensures that the terminal device detects the corresponding transmit signals in each receive direction. Based on this processing, the user may complete the detection of SSB signals of the plurality of neighbor cells through one round of receive beam sweeping. In this case, the terminal device may complete SSB measurements for all neighbor cells through one round of receive beam sweeping.

When the transmit beam carries the SSB, the first information may be used for the terminal device to determine the sweeping direction and number of beams. The serving cell needs to notify the terminal device of the first information, which may include the direction of SSB beam sweeping. The terminal device determines a direction of the receive beam sweeping based on the direction of the SSB beam sweeping. For example, the direction of the receive beam sweeping may be opposite to a SSB sending direction. To facilitate the determination of the direction of the receive beam sweeping, it is recommended that each network device execute in the order of the direction of the SSB beam sweeping, and while there may be times when no SSB is sent, the SSBs in the original direction should not be sent through time jumps or intervals.

In some embodiments, the beam numbers of transmit beams corresponding to the plurality of neighbor cells and the serving cell may differ. The plurality of neighbor cells and the serving cell may be all or some of cells corresponding to the terminal device. This difference may include the difference in the numbers of transmit beams corresponding to all cells including the plurality of neighbor cells and the serving cell. Therefore, the difference in number may indicate that beam numbers of all cells are different from each other, or only beam numbers of some cells are different from each other. That is to say, among all the cells, there may be some cells with the same beam number, but there are cases where cells with different beam numbers. For example, total numbers of SSBs corresponding to the neighbor cells of the terminal device may differ from each other.

In some embodiments, when the beam numbers of transmit beams of the plurality of neighbor cells and the serving cell vary, the terminal device may determine the transmit beam for each neighbor cell or the serving cell on the first time unit based on a maximum transmit beam number. The maximum transmit beam number may also be referred to as a maximum beam sweeping number. The maximum transmit beam number is a maximum value of a plurality of transmit beam numbers corresponding to the plurality of neighbor cells and the serving cell. For example, when the total numbers of SSBs of the plurality of neighbor cells differ from each other, the receive beam sweeping may be performed based on the maximum beam number in the region.

In some embodiments, the maximum transmit beam number may be sent to the terminal device by the network device. In other words, the terminal device may receive the maximum transmit beam number sent by the network device. For example, the first information as described above may include the maximum transmit beam number.

As a possible implementation, the maximum transmit beam number determined by the network device may be determined in one of the following ways: determined by a core network corresponding to the plurality of neighbor cells according to beam configurations of the plurality of neighbor cells; determined by the network device according to the beam configurations of the plurality of neighbor cells transmitted through a network device interface; the core network notifying or suggesting the maximum transmit beam number to the serving cell; and the serving cell notifying the terminal device of the maximum transmit beam number.

As an embodiment, the core network may be, for example, the AMF and/or LMF. For example, when each network device needs to notify its neighbor cells of the beam configuration, each cell may notify the AMF of this information. The AMF may determine the maximum beam sweeping number and notify this value to each network device. Each network device, upon receiving the maximum beam sweeping value notified by the AMF, may notify this information to the terminal devices within its coverage area or those that are camped.

As an embodiment, the network device interface may be an X2 interface or an X3 interface. For example, each base station may notify each other through the X2 or X3 interfaces. Each base station may determine a maximum receive beam number based on the received information and notify this information to the terminal device.

As an embodiment, the core network may notify or suggest the maximum transmit beam number of the serving cell. The core network may determine this maximum transmit beam number through the above methods and notify or suggest it to the serving cell.

As an embodiment, the serving cell may notify the maximum transmit beam number of the terminal device. The serving cell may determine this maximum transmit beam number based on the notification or suggestion from the core network or through the interaction with the network device, and then inform the terminal devices within the serving cell.

In some embodiments, for terminal devices in a non-access state, there may be cases where the configured receive beam sweeping number is less than the transmit beam sweeping number of the cell. To address this issue, the maximum beam sweeping number may be configured for the terminal device. Taking the IoT terminal device receiving SSB information as an example, when a location of the IoT terminal device changes, the terminal device may not access the cell. In other words, even if the terminal device is within the coverage area of a new cell, it may not update the SSB information and the maximum beam sweeping number of that cell. In such cases, the maximum receive beam sweeping number of that cell may differ from the maximum receive beam sweeping number configured for the terminal device. For example, the maximum receive beam sweeping number of that cell may exceed the maximum receive beam sweeping number configured for the terminal device, resulting in the terminal device missing some beams. To resolve this issue, the maximum receive beam sweeping number of the terminal device may be configured to be 64. When the actual number of SSB beams transmitted is less than 64, beams required to be transmitted may be determined based on the correspondence between beam directions and sending times among the 64 beams.

As previously mentioned, the number of transmit beams corresponding to the first neighbor cell may differ from the number of beams corresponding to the serving cell. For example, if the first neighbor cell corresponds to 4 transmit beams, the serving cell may have 8 transmit beams. To facilitate the terminal device in quickly completing beam pairing, the beam direction of the transmit beam sent by the first neighbor cell on a certain time unit may be related to the beam direction of the serving cell. The terminal device may determine the beam direction of the transmit beam of the first neighbor cell based on this correlation, thereby determining the beam direction of the receive beam.

Exemplarily, if the number of transmit beams corresponding to the first neighbor cell is N times the number of transmit beams corresponding to the serving cell, where $N \geq 1$, a beam direction of a transmit beam sent by the first neighbor cell on an $i^{th}$ time unit may be related to a beam direction of a transmit beam sent by the serving cell on a floor$(i/N)^{th}$ time unit.

For example, if the number of transmit beams corresponding to the first neighbor cell is N times the number of transmit beams corresponding to the serving cell, the beam direction of the transmit beam sent by the first neighbor cell on the $i^{th}$ time unit may satisfy: angle[floor(i/N)]+{angle[floor(i/N)+1]-angle[floor(i/N)]}/N*mod(i,N); where angle(j) represents an angle of a beam direction of the serving cell on a $j^{th}$ time unit, and mod represents a modulus operation.

Exemplarily, if the number of transmit beams corresponding to the serving cell is N times the number of transmit beams corresponding to the first neighbor cell, where $N \geq 1$, the beam direction of the transmit beam sent by the first neighbor cell on the $i^{th}$ time unit may be related to a beam direction of a transmit beam sent by the serving cell on an $i*N^{th}$ time unit.

In some embodiments, the plurality of cells corresponding to the terminal device may be used to determine a valid region. Exemplarily, the serving cell and the plurality of neighbor cells corresponding to the terminal device may be used to determine a first valid region corresponding to the terminal device.

As a possible implementation, a plurality of cells within the first valid region may configure, via the core network, parameters for the plurality of cells to perform transmit beam sweeping. Still taking the transmit beam carrying SSB as an example, SSBs of each cell may be jointly configured through the core network. For example, the core network may have specific requirements regarding the synchronization and beam sweeping direction of the SSBs for of the plurality of cells within the first valid region. In other words, it is specified that this requirement is applied within a certain range (e.g., within the valid region) and the core network notifies the network device of the beam sweeping direction of the SSB. Network devices corresponding to each cell may perform beam sweeping according to relevant configurations of the core network.

Exemplarily, the first information may further include the maximum transmit beam number corresponding to the first valid region. For example, the core network may notify all cells within the first valid region of this maximum transmit beam number.

Exemplarily, the network device may receive indications from the core network and respond to those indications. Taking SSB as an example, the network device may notify the core network of the actual number of SSBs to be transmitted or the maximum number of SSBs to be transmitted. Since the maximum number of SSBs to be transmitted may be 4, 8, or 64, the actual number of SSBs to be transmitted may be less than the maximum number of SSBs to be transmitted. The AMF may determine the maximum value of the beams for the terminal device to perform receive beam sweeping based on the actual number of SSBs to be transmitted or the maximum number of SSBs to be transmitted.

As shown in FIG. 4, the embodiments of the present disclosure discuss the design of the propagation direction of pilot signals for various cells. This design may improve the beam sweeping efficiency of neighbor cells. The embodiments of the present disclosure enable the terminal device to quickly complete beam pairing during neighbor cell beam sweeping through beam sweeping design and related standardized indications, thus achieving neighbor cell beam sweeping with shorter time and less power consumption.

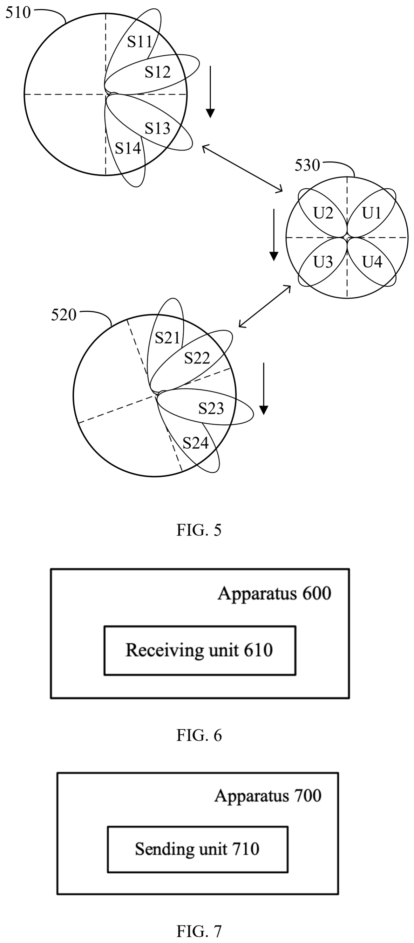

The previous description describes the method for determining the receive and/or transmit beam direction of the terminal device based on the first information with reference to FIG. 4. For better understanding, the following describes a possible implementation of the method shown in the present disclosure with reference to FIG. 5.

In the azimuth plane shown in FIG. 5, two network devices and one terminal device are displayed, namely network device 510, network device 520, and terminal device 530. It is assumed that both network devices perform transmit beam sweeping while the terminal device performs receive beam sweeping. As shown in FIG. 5, both network device 510 and network device 520 have 4 transmit beams, and terminal device 530 has 4 receive beams. Specifically, the 4 receive beams of terminal device 530 are U1, U2, U3, and U4. The 4 transmit beams of network device 510 are S11, S12, S13, and S14, and the 4 transmit beams of network device 520 are S21, S22, S23, and S24.

Referring to FIG. 5, both network device 510 and network device 520 perform beam sweeping of the 4 transmit beams in a clockwise direction, while terminal device 530 performs beam sweeping of the 4 receive beams in a counterclockwise direction.

As shown in FIG. 5, the receive beam U2 of terminal device 530 corresponds to the transmit beam S13 of network device 510. The receive beam U3 of terminal device 530 corresponds to the transmit beam S22 of network device 520. Therefore, terminal device 530 may receive signals through U2 on a time unit corresponding to S 13 and receive signals through U3 on a time unit corresponding to S22.

The method embodiments of the present disclosure are described in detail above with reference to FIG. 1 to FIG. 5. Apparatus embodiments of the present disclosure are described in detail below with reference to FIG. 6 to FIG. 8. It should be understood that the descriptions of the apparatus embodiments correspond to the descriptions of the method embodiments, and therefore, reference may be made to the foregoing method embodiments for parts that are not described in detail.

FIG. 6 is a schematic block diagram of an apparatus for wireless communication according to an embodiment of the present disclosure. The apparatus 600 may be any terminal device described above. The apparatus 600 shown in FIG. 6 includes a receiving unit 610.

The receiving unit 610 is configured to receive first information sent by a network device, where the network device corresponds to a serving cell of the terminal device, and the first information is used for the terminal device to determine a beam direction of a first transmit beam and/or a first receive beam on a first time unit; where the first information includes at least one of: transmit beam sweeping performed by a first neighbor cell being synchronized with transmit beam sweeping performed by the serving cell being synchronized; an offset value of the transmit beam sweeping performed by the first neighbor cell relative to the transmit beam sweeping performed by the serving cell; and beam directions and sending times of a plurality of transmit beams corresponding to the serving cell and/or the first neighbor cell.

Optionally, the first information is further used for the terminal device to determine the beam directions and the sending times of the plurality of transmit beams corresponding to the serving cell and/or the first neighbor cell, and the apparatus 600 further includes: a first determining unit, configured to determine the first receive beam based on a beam direction of a transmit beam corresponding to the first time unit among the plurality of transmit beams; where the receiving unit 610 is further configured to receive a signal on the first time unit through the first receive beam.

Optionally, the first information is used for the terminal device to determine the beam direction of the first receive beam on the first time unit, and when a beam direction of a transmit beam of the serving cell and/or the first neighbor cell on the first time unit is a degrees, a receive direction of the first receive beam is a+180 degrees.

Optionally, the first information is sent through broadcast signaling of the network device.

Optionally, the first information is carried in the MIB or the SIB.

Optionally, the first information indicates synchronization between the transmit beam sweeping performed by the first neighbor cell and the transmit beam sweeping performed by the serving cell, the synchronization includes time synchronization and/or direction synchronization between the transmit beam sweeping performed by the first neighbor cell and the transmit beam sweeping performed by the serving cell, and the beam direction of the first receive beam is determined according to a transmit beam of the serving cell on the first time unit.

Optionally, the first information includes the offset value of the transmit beam sweeping performed by the first neighbor cell relative to the transmit beam sweeping performed by the serving cell, the offset value includes a time offset value and/or a direction offset value, and the beam direction of the first receive beam is determined according to a transmit beam of the serving cell on the first time unit and the offset value.

Optionally, the first receive beam is one of a plurality of receive beams for the terminal device to perform beam sweeping on the serving cell and/or the first neighbor cell, and a number of receive beams of the terminal device is different from a number of transmit beams of the serving cell and/or the first neighbor cell.

Optionally, the first neighbor cell is any one of a plurality of neighbor cells corresponding to the terminal device, the first information is used for the terminal device to determine a plurality of transmit beams corresponding to the plurality of neighbor cells, and the apparatus 600 further includes: a second determining unit, configured to determine one or more receive beams corresponding to the plurality of neighbor cells via the plurality of transmit beams, where the one or more receive beams are used for the terminal device to measure the plurality of neighbor cells.

Optionally, when a number of the plurality of transmit beams corresponding to the plurality of neighbor cells and a number of transmit beams of the serving cell are different, the apparatus 600 further includes: a third determining unit, configured to determine transmit beams of each of the plurality of neighbor cells or transmit beams of the serving cell on the first time unit based on a maximum transmit beam number, where the maximum transmit beam number is a maximum value of a plurality of transmit beam numbers corresponding to the plurality of neighbor cells and the serving cell.

Optionally, the receiving unit is further configured to receive the maximum transmit beam number sent by the network device, where the maximum transmit beam number is determined in one of following ways: determined by a core network corresponding to the plurality of neighbor cells according to beam configurations of the plurality of neighbor cells; determined by the network device according to the beam configurations of the plurality of neighbor cells transmitted through a network device interface; the core network notifying or suggesting the maximum transmit beam number to the serving cell; and the serving cell notifying the terminal device of the maximum transmit beam number.

Optionally, the beam directions and sending times of the plurality of transmit beams corresponding to the serving cell and/or the first neighbor cell are notified by a core network.

Optionally, the beam directions and sending times of the plurality of transmit beams corresponding to the serving cell and the first neighbor cell are notified or suggested to the serving cell and/or the first neighbor cell by the core network, and the serving cell and/or the first neighbor cell are further configured to provide feedback to the core network indicating that one or both of the serving cell and the first neighbor perform based on the beam directions and sending times of the plurality of transmit beams notified or suggested by the core network.

Optionally, if a number of transmit beams corresponding to the first neighbor cell is N times a number of transmit beams corresponding to the serving cell, where N≥1, a beam direction of a transmit beam of the first neighbor cell on an $i^{th}$ time unit is related to a beam direction of a transmit beam of the serving cell on a floor(i/N)$^{th}$ time unit; or if the number of transmit beams corresponding to the serving cell is N times the number of transmit beams corresponding to the first neighbor cell, where N≥1, the beam direction of the transmit beam of the first neighbor cell on the $i^{th}$ time unit is related to a beam direction of a transmit beam of the serving cell on an i*N$^{th}$ time unit.

Optionally, the number of transmit beams corresponding to the first neighbor cell is N times the number of transmit beams corresponding to the serving cell, where N≥1, and the beam direction of the transmit beam of the first neighbor cell on the $i^{th}$ time unit satisfies:

$$\text{angle}[\text{floor}(i/N)]+\{\text{angle}[\text{floor}(i/N)+1]-\text{angle}[\text{floor}(i/N)]\}/N*\text{mod}(i,N);$$

where angle(j) represents an angle of a beam direction of the serving cell on a $j^{th}$ time unit, and mod represents a modulus operation.

Optionally, the serving cell and a plurality of neighbor cells corresponding to the terminal device are configured to determine a first valid region corresponding to the terminal device, and the first information further includes a maximum transmit beam number corresponding to the first valid region.

Optionally, a plurality of cells in the first valid region configure, via a core network, parameters for the plurality of cells to perform transmit beam sweeping.

Optionally, the plurality of transmit beams corresponding to the serving cell and/or the first neighbor cell are used to carry SSBs.

FIG. 7 is another schematic block diagram of an apparatus for wireless communication according to an embodiment of the present disclosure. The apparatus 700 may be any network device described above. The apparatus 700 shown in FIG. 7 includes a sending unit 710.

The sending unit 710 is configured to send first information to a terminal device, where the network device corresponds to a serving cell of the terminal device, and the first information is used for the terminal device to determine a beam direction of a first transmit beam and/or a first receive beam on a first time unit; where the first information includes at least one of: whether transmit beam sweeping performed by a first neighbor cell and transmit beam sweeping performed by the serving cell are synchronized; an offset value of the transmit beam sweeping performed by the first neighbor cell relative to the transmit beam sweeping performed by the serving cell; and beam directions and sending times of a plurality of transmit beams corresponding to the serving cell and/or the first neighbor cell.

Optionally, the first information is used for the terminal device to determine the beam direction of the first receive beam on the first time unit, and when a beam direction of a transmit beam of the serving cell and/or the first neighbor cell on the first time unit is a degrees, a receive direction of the first receive beam is a+180 degrees.

Optionally, the first information is sent through broadcast signaling of the network device.

Optionally, the first information is carried in the MIB or the SIB.

Optionally, the first information indicates synchronization between the transmit beam sweeping performed by the first neighbor cell and the transmit beam sweeping performed by the serving cell, the synchronization includes time synchronization and/or direction synchronization between the transmit beam sweeping performed by the first neighbor cell and the transmit beam sweeping performed by the serving cell, and the beam direction of the first receive beam is determined according to a transmit beam of the serving cell on the first time unit.

Optionally, the first information includes the offset value of the transmit beam sweeping performed by the first neighbor cell relative to the transmit beam sweeping performed by the serving cell, the offset value includes a time offset value and/or a direction offset value, and the beam direction of the first receive beam is determined according to a transmit beam of the serving cell on the first time unit and the offset value.

Optionally, the first receive beam is one of a plurality of receive beams for the terminal device to perform beam sweeping on the serving cell and/or the first neighbor cell, and a number of receive beams of the terminal device is different from a number of transmit beams of the serving cell and/or the first neighbor cell.

Optionally, the first neighbor cell is any one of a plurality of neighbor cells corresponding to the terminal device, the first information is used for the terminal device to determine a plurality of transmit beams corresponding to the plurality of neighbor cells, the sending unit is further configured to send a maximum transmit beam number to the terminal device, where the maximum transmit beam number is a maximum value of a plurality of transmit beam numbers corresponding to the plurality of neighbor cells and the serving cell, and the maximum transmit beam number is determined in one of following ways: determined by a core network corresponding to the plurality of neighbor cells according to beam configurations of the plurality of neighbor cells; determined by the network device according to the beam configurations of the plurality of neighbor cells transmitted through a network device interface; the core network notifying or suggesting the maximum transmit beam number to the serving cell; and the serving cell notifying the terminal device of the maximum transmit beam number.

Optionally, the beam directions and sending times of the plurality of transmit beams corresponding to the serving cell and/or the first neighbor cell are notified by a core network.

Optionally, the beam directions and sending times of the plurality of transmit beams corresponding to the serving cell and the first neighbor cell are notified or suggested to the serving cell and/or the first neighbor cell by the core network, and the serving cell and/or the first neighbor cell are further configured to provide feedback to the core network indicating that one or both of the serving cell and the first neighbor perform based on the beam directions and sending times of the plurality of transmit beams notified or suggested by the core network.

Optionally, if a number of transmit beams corresponding to the first neighbor cell is N times a number of transmit beams corresponding to the serving cell, where $N \geq 1$, a beam direction of a transmit beam of the first neighbor cell on an $i^{th}$ time unit is related to a beam direction of a transmit beam of the serving cell on a $floor(i/N)^{th}$ time unit; or if the number of transmit beams corresponding to the serving cell is N times the number of transmit beams corresponding to the first neighbor cell, where $N \geq 1$, the beam direction of the transmit beam of the first neighbor cell on the $i^{th}$ time unit is related to a beam direction of a transmit beam of the serving cell on an $i*N^{th}$ time unit.

Optionally, the number of transmit beams corresponding to the first neighbor cell is N times the number of transmit beams corresponding to the serving cell, where $N \geq 1$, and the beam direction of the transmit beam of the first neighbor cell on the $i^{th}$ time unit satisfies:

$$angle[floor(i/N)]+\{angle[floor(i/N)+1]-angle[floor(i/N)]\}/N*mod(i,N);$$

where angle(j) represents an angle of a beam direction of the serving cell on a $j^{th}$ time unit, and mod represents a modulus operation.

Optionally, the first neighbor cell is any one of a plurality of neighbor cells corresponding to the terminal device, the serving cell and the plurality of neighbor cells are configured to determine a first valid region corresponding to the terminal device, and the first information further includes a maximum transmit beam number corresponding to the first valid region.

Optionally, a plurality of cells in the first valid region configure, via a core network, parameters for the plurality of cells to perform transmit beam sweeping.

Optionally, the plurality of transmit beams corresponding to the serving cell and/or the first neighbor cell are used to carry SSBs.

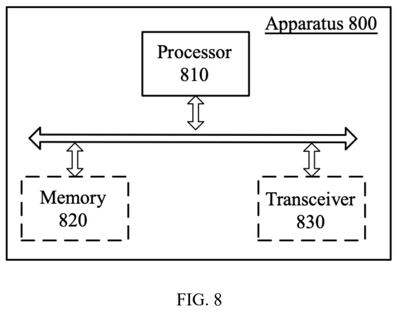

FIG. 8 is a schematic structural diagram of an apparatus for communication according to an embodiment of the present disclosure. The dashed line in FIG. 8 indicates that the unit or module is optional. The apparatus 800 may be configured to implement the method described in the foregoing method embodiments. The apparatus 800 may be a chip, a terminal device, or a network device.

The apparatus 800 may include one or more processors 810, and the processor 810 may support the apparatus 800 to implement the method described in the foregoing method embodiments. The processor 810 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 800 may further include one or more memories 820 storing a program, and the program may be executed by the processor 810 to cause the processor 810 to perform the method described in the foregoing method embodiments. The memory 820 may be independent of the processor 810 or may be integrated into the processor 810.

The apparatus 800 may further include a transceiver 830, and the processor 810 may communicate with another device or chip via the transceiver 830. For example, the processor 810 may perform data transceiving with another device or chip via the transceiver 830.

Embodiments of the present disclosure further provide a computer-readable storage medium, configured to store a program. The computer-readable storage medium may be applied to the terminal device or network device provided in the embodiments of the present disclosure, and the program causes the computer to perform the method performed by the terminal device or network device in the embodiments of the present disclosure.

The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

Embodiments of the present disclosure further provide a computer program product. The computer program product includes a program. The computer program product may be applied to the terminal device or network device provided in the embodiments of the present disclosure, and the program causes the computer to perform the method performed by the terminal or network device in the embodiments of the present disclosure.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner.

Embodiments of the present disclosure further provide a computer program. The computer program may be applied to the terminal device or network device provided in the embodiments of the present disclosure, and the computer program causes the computer to perform the method performed by the terminal or network device in the embodiments of the present disclosure.

The terms "system" and "network" in the present disclosure may be used interchangeably. In addition, the terms used in the present disclosure are merely used to explain specific embodiments of the present disclosure and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

The term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

The term "corresponding" may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" or "preconfigured" may be implemented by pre-storing a corresponding code, a table, or another manner that may be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communication system, which is not limited in the present disclosure.

In the embodiments of the present disclosure, determining B based on A does not mean that B is determined only based on A, or B may also be determined based on A and/or other information.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In various embodiments of the present disclosure, a size of a serial number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for wireless communication, comprising:

   receiving, by a terminal device, first information sent by a network device, wherein the network device corresponds to a serving cell of the terminal device, and the first information is used for the terminal device to determine a beam direction of one or both of a first transmit beam and a first receive beam on a first time unit; wherein the first information includes at least one of:

   whether transmit beam sweeping performed by a first neighbor cell is synchronized with transmit beam sweeping performed by the serving cell;
   an offset value of the transmit beam sweeping performed by the first neighbor cell relative to the transmit beam sweeping performed by the serving cell; and
   beam directions and sending times of a plurality of transmit beams corresponding to one or both of the serving cell and the first neighbor cell.

2. The method according to claim 1, wherein the first information is further used for the terminal device to determine the beam directions and the sending times of the plurality of transmit beams corresponding to one or both of the serving cell and the first neighbor cell, and the method further includes:

   determining, by the terminal device, the first receive beam based on a beam direction of a transmit beam corresponding to the first time unit among the plurality of transmit beams; and
   receiving, by the terminal device, a signal on the first time unit through the first receive beam.

3. The method according to claim 1 or claim 2, wherein the first information is used for the terminal device to determine the beam direction of the first receive beam on the first time unit, and when a beam direction of a transmit beam of one or both of the serving cell and the first neighbor cell on the first time unit is a degrees, a receive direction of the first receive beam is a+180 degrees.

4. The method according to any one of claims 1 to 3, wherein the first information is sent through broadcast signaling of the network device.

5. The method according to claim 4, wherein the first information is carried in a management information base, MIB, or a system information block, SIB.

6. The method according to any one of claims 1 to 5, wherein the first information indicates synchronization between the transmit beam sweeping performed by the first neighbor cell and the transmit beam sweeping performed by the serving cell, the synchronization includes one or both of time synchronization and direction synchronization between the transmit beam sweeping performed by the first neighbor cell and the transmit beam sweeping performed by the serving cell, and the beam direction of the first receive beam is determined according to a transmit beam of the serving cell on the first time unit.

7. The method according to any one of claims 1 to 5, wherein the first information includes the offset value of the transmit beam sweeping performed by the first neighbor cell relative to the transmit beam sweeping performed by the serving cell, the offset value includes one or both of a time offset value and a direction offset value, and the beam direction of the first receive beam is determined according to a transmit beam of the serving cell on the first time unit and the offset value.

8. The method according to any one of claims 1 to 7, wherein the first receive beam is one of a plurality of receive beams for the terminal device to perform beam sweeping on one or both of the serving cell and the first neighbor cell, and a number of receive beams of the terminal device is different from a number of transmit beams of one or both of the serving cell and the first neighbor cell.

9. The method according to any one of claims 1 to 8, wherein the first neighbor cell is any one of a plurality of neighbor cells corresponding to the terminal device, the first information is used for the terminal device to determine a plurality of transmit beams corresponding to the plurality of neighbor cells, and the method further includes:
determining, by the terminal device, one or more receive beams corresponding to the plurality of neighbor cells via the plurality of transmit beams, wherein the one or more receive beams are used for the terminal device to measure the plurality of neighbor cells.

10. The method according to claim 9, wherein when a number of the plurality of transmit beams corresponding to the plurality of neighbor cells and a number of transmit beams of the serving cell are different, the method further includes:
determining, by the terminal device, transmit beams of each of the plurality of neighbor cells or transmit beams of the serving cell on the first time unit based on a maximum transmit beam number, wherein the maximum transmit beam number is a maximum value of a plurality of transmit beam numbers corresponding to the plurality of neighbor cells and the serving cell.

11. The method according to claim 10, further comprising:
receiving, by the terminal device, the maximum transmit beam number sent by the network device, wherein the maximum transmit beam number is determined in one of following ways:

determined by a core network corresponding to the plurality of neighbor cells according to beam configurations of the plurality of neighbor cells;
determined by the network device according to the beam configurations of the plurality of neighbor cells transmitted through a network device interface;
the core network notifying or suggesting the maximum transmit beam number to the serving cell; and
the serving cell notifying the terminal device of the maximum transmit beam number.

12. The method according to any one of claims 1 to 11, wherein the beam directions and sending times of the plurality of transmit beams corresponding to one or both of the serving cell and the first neighbor cell are notified by a core network.

13. The method according to claim 12, wherein the beam directions and sending times of the plurality of transmit beams corresponding to the serving cell and the first neighbor cell are notified or suggested to one or both of the serving cell and the first neighbor cell by the core network, and one or both of the serving cell and the first neighbor cell are further configured to provide feedback to the core network indicating that one or both of the serving cell and the first neighbor perform configurations based on the beam directions and sending times of the plurality of transmit beams notified or suggested by the core network.

14. The method according to any one of claims 1 to 13, wherein:

if a number of transmit beams corresponding to the first neighbor cell is N times a number of transmit beams corresponding to the serving cell, wherein $N \geq 1$, a beam direction of a transmit beam of the first neighbor cell on an $i^{th}$ time unit is related to a beam direction of a transmit beam of the serving cell on a floor(i/N)$^{th}$ time unit; or
if the number of transmit beams corresponding to the serving cell is N times the number of transmit beams corresponding to the first neighbor cell, wherein $N \geq 1$, the beam direction of the transmit beam of the first neighbor cell on the $i^{th}$ time unit is related to a beam direction of a transmit beam of the serving cell on an $i*N^{th}$ time unit.

15. The method according to claim 13, wherein the number of transmit beams corresponding to the first neighbor cell is N times the number of transmit beams corresponding to the serving cell, wherein $N \geq 1$, and the beam direction of the transmit beam of the first neighbor cell on the $i^{th}$ time unit satisfies:

$$\text{angle[floor(i/N)]} + \{\text{angle[floor(i/N)+1]} - \text{angle[floor(i/N)]}\}/N*\text{mod(i,N)};$$

wherein angle(j) represents an angle of a beam direction of the serving cell on a $j^{th}$ time unit, and mod represents a modulus operation.

16. The method according to any one of claims 1 to 15, wherein the first neighbor cell is any one of a plurality of neighbor cells corresponding to the terminal device, the serving cell and the plurality of neighbor cells are configured to determine a first valid region corresponding to the terminal device, and the first information further includes a maximum transmit beam number corresponding to the first valid region.

17. The method according to claim 16, wherein a plurality of cells in the first valid region configure, via a core network, parameters for the plurality of cells to perform transmit beam sweeping.

18. The method according to any one of claims 1 to 17, wherein the plurality of transmit beams corresponding to one or both of the serving cell and the first neighbor cell are used to carry synchronization signal blocks, SSBs.

19. A method for wireless communication, comprising:

sending, by a network device, first information to a terminal device, wherein the network device corresponds to a serving cell of the terminal device, and the first information is used for the terminal device to determine a beam direction of one or both of a first transmit beam and a first receive beam on a first time unit;
wherein the first information includes at least one of:

whether transmit beam sweeping performed by a first neighbor cell is synchronized with transmit beam sweeping performed by the serving cell;
an offset value of the transmit beam sweeping performed by the first neighbor cell relative to the transmit beam sweeping performed by the serving cell; and
beam directions and sending times of a plurality of transmit beams corresponding to one or both of the serving cell and the first neighbor cell.

20. The method according to claim 19, wherein the first information is used for the terminal device to determine the beam direction of the first receive beam on the first time unit, and when a beam direction of a transmit beam of one or both of the serving cell and the first neighbor cell on the first time unit is a degrees, a receive direction of the first receive beam is a+180 degrees.

21. The method according to claim 19 or claim 20, wherein the first information is sent through broadcast signaling of the network device.

22. The method according to claim 21, wherein the first information is carried in a management information base, MIB, or a system information block, SIB.

23. The method according to any one of claims 19 to 22, wherein the first information indicates synchronization between the transmit beam sweeping performed by the first neighbor cell and the transmit beam sweeping performed by the serving cell, the synchronization includes one or both of time synchronization and direction synchronization between the transmit beam sweeping performed by the first neighbor cell and the transmit beam sweeping performed by the serving cell, and the beam direction of the first receive beam is determined according to a transmit beam of the serving cell on the first time unit.

24. The method according to any one of claims 19 to 22, wherein the first information includes the offset value of the transmit beam sweeping performed by the first neighbor cell relative to the transmit beam sweeping performed by the serving cell, the offset value includes one or both of a time offset value and a direction offset value, and the beam direction of the first receive beam is determined according to a transmit beam of the serving cell on the first time unit and the offset value.

25. The method according to any one of claims 19 to 24, wherein the first receive beam is one of a plurality of receive beams for the terminal device to perform beam sweeping on one or both of the serving cell and the first neighbor cell, and a number of receive beams of the terminal device is different from a number of transmit beams of one or both of the serving cell and the first neighbor cell.

26. The method according to any one of claims 19 to 25, wherein the first neighbor cell is any one of a plurality of neighbor cells corresponding to the terminal device, the first information is used for the terminal device to determine a plurality of transmit beams corresponding to the plurality of neighbor cells, and the method further includes:

sending, by the network device, a maximum transmit beam number to the terminal device, wherein the maximum transmit beam number is a maximum value of a plurality of transmit beam numbers corresponding to the plurality of neighbor cells and the serving cell, and the maximum transmit beam number is determined in one of following ways:

determined by a core network corresponding to the plurality of neighbor cells according to beam configurations of the plurality of neighbor cells;
determined by the network device according to the beam configurations of the plurality of neighbor cells transmitted through a network device interface;
the core network notifying or suggesting the maximum transmit beam number to the serving cell; and
the serving cell notifying the terminal device of the maximum transmit beam number.

27. The method according to any one of claims 19 to 26, wherein the beam directions and sending times of the plurality of transmit beams corresponding to one or both of the serving cell and the first neighbor cell are notified by a core network.

28. The method according to claim 27, wherein the beam directions and sending times of the plurality of transmit beams corresponding to the serving cell and the first neighbor cell are notified or suggested to one or both of the serving cell and the first neighbor cell by the core network, and one or both of the serving cell and the first neighbor cell are further configured to provide feedback to the core network indicating that one or both of the serving cell and the first neighbor perform configurations based on the beam directions and sending times of the plurality of transmit beams notified or suggested by the core network.

29. The method according to any one of claims 19 to 28, wherein:

if a number of transmit beams corresponding to the first neighbor cell is N times a number of transmit beams corresponding to the serving cell, wherein $N \geq 1$, a beam direction of a transmit beam of the first neighbor cell on an $i^{th}$ time unit is related to a beam direction of a transmit beam of the serving cell on a floor$(i/N)^{th}$ time unit; or
if the number of transmit beams corresponding to the serving cell is N times the number of transmit beams corresponding to the first neighbor cell, wherein $N \geq 1$, the beam direction of the transmit beam of the first neighbor cell on the $i^{th}$ time unit is related to a beam direction of a transmit beam of the serving cell on an $i*N^{th}$ time unit.

30. The method according to claim 29, wherein the number of transmit beams corresponding to the first neighbor cell is N times the number of transmit beams corresponding to the serving cell, wherein $N \geq 1$, and the beam direction of the transmit beam of the first neighbor cell on the $i^{th}$ time unit satisfies:

$$angle[floor(i/N)]+\{angle[floor(i/N)+1]-angle[floor(i/N)]\}/N*mod(i,N);$$

wherein angle(j) represents an angle of a beam direction of the serving cell on a $j^{th}$ time unit, and mod represents a modulus operation.

31. The method according to any one of claims 19 to 30, wherein the first neighbor cell is any one of a plurality of neighbor cells corresponding to the terminal device, the serving cell and the plurality of neighbor cells are configured to determine a first valid region corresponding to the terminal device, and the first information further includes a maximum transmit beam number corresponding to the first valid region.

32. The method according to claim 31, wherein a plurality of cells in the first valid region configure, via a core network, parameters for the plurality of cells to perform transmit beam sweeping.

33. The method according to any one of claims 19 to 32, wherein the plurality of transmit beams corresponding to one or both of the serving cell and the first neighbor cell are used to carry synchronization signal blocks, SSBs.

34. An apparatus for wireless communication, wherein the apparatus is a terminal device, and the terminal device comprises:

a receiving unit, configured to receive first information sent by a network device, wherein the network device corresponds to a serving cell of the terminal device, and the first information is used for the terminal device to determine a beam direction of one or both of a first transmit beam and a first receive beam on a first time unit; wherein the first information includes at least one of:

transmit beam sweeping performed by a first neighbor cell being synchronized with transmit beam sweeping performed by the serving cell;
an offset value of the transmit beam sweeping performed by the first neighbor cell relative to the transmit beam sweeping performed by the serving cell; and
beam directions and sending times of a plurality of transmit beams corresponding to one or both of the serving cell and the first neighbor cell.

35. The apparatus according to claim 34, wherein the first information is further used for the terminal device to determine the beam directions and the sending times of the plurality of transmit beams corresponding to one or both of the serving cell and the first neighbor cell, and the terminal device further includes:

a first determining unit, configured to determine the first receive beam based on a beam direction of a transmit beam corresponding to the first time unit among the plurality of transmit beams;
wherein the receiving unit is further configured to receive a signal on the first time unit through the first receive beam.

36. The apparatus according to claim 34 or claim 35, wherein the first information is used for the terminal device to determine the beam direction of the first receive beam on the first time unit, and when a beam direction of a transmit beam of one or both of the serving cell and the first neighbor cell on the first time unit is a degrees, a receive direction of the first receive beam is a+180 degrees.

37. The apparatus according to any one of claims 34 to 36, wherein the first information is sent through broadcast signaling of the network device.

38. The apparatus according to claim 37, wherein the first information is carried in a management information base, MIB, or a system information block, SIB.

39. The apparatus according to any one of claims 34 to 38, wherein the first information indicates synchronization between the transmit beam sweeping performed by the first neighbor cell and the transmit beam sweeping performed by the serving cell, the synchronization includes one or both of time synchronization and direction synchronization between the transmit beam sweeping performed by the first neighbor cell and the transmit beam sweeping performed by the serving cell, and the beam direction of the first receive beam is determined according to a transmit beam of the serving cell on the first time unit.

40. The apparatus according to any one of claims 34 to 38, wherein the first information includes the offset value of the transmit beam sweeping performed by the first neighbor cell relative to the transmit beam sweeping performed by the serving cell, the offset value includes one or both of a time offset value and a direction offset value, and the beam direction of the first receive beam is determined according to a transmit beam of the serving cell on the first time unit and the offset value.

41. The apparatus according to any one of claims 34 to 40, wherein the first receive beam is one of a plurality of receive beams for the terminal device to perform beam sweeping on one or both of the serving cell and the first neighbor cell, and a number of receive beams of the terminal device is different from a number of transmit beams of one or both of the serving cell and the first neighbor cell.

42. The apparatus according to any one of claims 34 to 41, wherein the first neighbor cell is any one of a plurality of neighbor cells corresponding to the terminal device, the first information is used for the terminal device to determine a plurality of transmit beams corresponding to the plurality of neighbor cells, and the terminal device further includes:
a second determining unit, configured to determine one or more receive beams corresponding to the plurality of neighbor cells via the plurality of transmit beams, wherein the one or more receive beams are used for the terminal device to measure the plurality of neighbor cells.

43. The apparatus according to claim 42, wherein when a number of the plurality of transmit beams corresponding to the plurality of neighbor cells and a number of transmit beams of the serving cell are different, the terminal device further includes:

a third determining unit, configured to determine transmit beams of each of the plurality of neighbor cells or transmit beams of the serving cell on the first time unit based on a maximum transmit beam number, wherein the maximum transmit beam number is a maximum value of a plurality of transmit beam numbers corresponding to the plurality of neighbor cells and the serving cell.

44. The apparatus according to claim 43, wherein the receiving unit is further configured to receive the maximum transmit beam number sent by the network device, wherein the maximum transmit beam number is determined in one of following ways:

determined by a core network corresponding to the plurality of neighbor cells according to beam configurations of the plurality of neighbor cells;
determined by the network device according to the beam configurations of the plurality of neighbor cells transmitted through a network device interface;
the core network notifying or suggesting the maximum transmit beam number to the serving cell; and
the serving cell notifying the terminal device of the maximum transmit beam number.

45. The apparatus according to any one of claims 34 to 44, wherein the beam directions and sending times of the plurality of transmit beams corresponding to one or both of the serving cell and the first neighbor cell are notified by a core network.

46. The apparatus according to claim 45, wherein the beam directions and sending times of the plurality of transmit beams corresponding to the serving cell and the first neighbor cell are notified or suggested to one or both of the serving cell and the first neighbor cell by the core network, and one or both of the serving cell and the first neighbor cell are further configured to provide feedback to the core network indicating that one or both of the serving cell and the first neighbor perform configurations based on the beam directions and sending times of the plurality of transmit beams notified or suggested by the core network.

47. The apparatus according to any one of claims 34 to 46, wherein:

if a number of transmit beams corresponding to the first neighbor cell is N times a number of transmit beams corresponding to the serving cell, wherein $N \geq 1$, a beam direction of a transmit beam of the first neighbor cell on an $i^{th}$ time unit is related to a beam direction of a transmit beam of the serving cell on a $floor(i/N)^{th}$ time unit; or
if the number of transmit beams corresponding to the serving cell is N times the number of transmit beams corresponding to the first neighbor cell, wherein $N \geq 1$, the beam direction of the transmit beam of the first neighbor cell on the $i^{th}$ time unit is related to a beam direction of a transmit beam of the serving cell on an $i*N^{th}$ time unit.

48. The apparatus according to claim 47, wherein the number of transmit beams corresponding to the first neighbor cell is N times the number of transmit beams corresponding to the serving cell, wherein $N \geq 1$, and the beam direction of the transmit beam of the first neighbor cell on the $i^{th}$ time unit satisfies:

$$angle[floor(i/N)] + \{angle[floor(i/N)+1] - angle[floor(i/N)]\}/N*mod(i,N);$$

wherein angle(j) represents an angle of a beam direction of the serving cell on a $j^{th}$ time unit, and mod represents a modulus operation.

49. The apparatus according to any one of claims 34 to 48, wherein the serving cell and a plurality of neighbor cells corresponding to the terminal device are configured to determine a first valid region corresponding to the terminal device, and the first information further includes a maximum transmit beam number corresponding to the first valid region.

50. The apparatus according to claim 49, wherein a plurality of cells in the first valid region configure, via a core network, parameters for the plurality of cells to perform transmit beam sweeping.

51. The apparatus according to any one of claims 34 to 50, wherein the plurality of transmit beams corresponding to one or both of the serving cell and the first neighbor cell are used to carry synchronization signal blocks, SSBs.

52. An apparatus for wireless communication, wherein the apparatus is a network device, and the network device comprises:

> a sending unit, configured to send first information to a terminal device, wherein the network device corresponds to a serving cell of the terminal device, and the first information is used for the terminal device to determine a beam direction of one or both of a first transmit beam and a first receive beam on a first time unit;
> wherein the first information includes at least one of:
>
>> whether transmit beam sweeping performed by a first neighbor cell is synchronized with transmit beam sweeping performed by the serving cell;
>> an offset value of the transmit beam sweeping performed by the first neighbor cell relative to the transmit beam sweeping performed by the serving cell; and
>> beam directions and sending times of a plurality of transmit beams corresponding to one or both of the serving cell and the first neighbor cell.

53. The apparatus according to claim 52, wherein the first information is used for the terminal device to determine the beam direction of the first receive beam on the first time unit, and when a beam direction of a transmit beam of one or both of the serving cell and the first neighbor cell on the first time unit is a degrees, a receive direction of the first receive beam is a+180 degrees.

54. The apparatus according to claim 52 or claim 53, wherein the first information is sent through broadcast signaling of the network device.

55. The apparatus according to claim 54, wherein the first information is carried in a management information base, MIB, or a system information block, SIB.

56. The apparatus according to any one of claims 52 to 55, wherein the first information indicates synchronization between the transmit beam sweeping performed by the first neighbor cell and the transmit beam sweeping performed by the serving cell, the synchronization includes one or both of time synchronization and direction synchronization between the transmit beam sweeping performed by the first neighbor cell and the transmit beam sweeping performed by the serving cell, and the beam direction of the first receive beam is determined according to a transmit beam of the serving cell on the first time unit.

57. The apparatus according to any one of claims 52 to 55, wherein the first information includes the offset value of the transmit beam sweeping performed by the first neighbor cell relative to the transmit beam sweeping performed by the serving cell, the offset value includes one or both of a time offset value and a direction offset value, and the beam direction of the first receive beam is determined according to a transmit beam of the serving cell on the first time unit and the offset value.

58. The apparatus according to any one of claims 52 to 57, wherein the first receive beam is one of a plurality of receive beams for the terminal device to perform beam sweeping on one or both of the serving cell and the first neighbor cell, and a number of receive beams of the terminal device is different from a number of transmit beams of one or both of the serving cell and the first neighbor cell.

59. The apparatus according to any one of claims 52 to 58, wherein the first neighbor cell is any one of a plurality of neighbor cells corresponding to the terminal device, the first information is used for the terminal device to determine a plurality of transmit beams corresponding to the plurality of neighbor cells, the sending unit is further configured to send a maximum transmit beam number to the terminal device, wherein the maximum transmit beam number is a maximum value of a plurality of transmit beam numbers corresponding to the plurality of neighbor cells and the serving cell, and the maximum transmit beam number is determined in one of following ways:

> determined by a core network corresponding to the plurality of neighbor cells according to beam configurations of the plurality of neighbor cells;
> determined by the network device according to the beam configurations of the plurality of neighbor cells transmitted through a network device interface;
> the core network notifying or suggesting the maximum transmit beam number to the serving cell; and
> the serving cell notifying the terminal device of the maximum transmit beam number.

60. The apparatus according to any one of claims 52 to 59, wherein the beam directions and sending times of the plurality of transmit beams corresponding to one or both of the serving cell and the first neighbor cell are notified by a core network.

61. The apparatus according to claim 60, wherein the beam directions and sending times of the plurality of transmit beams corresponding to the serving cell and the first neighbor cell are notified or suggested to one or both of the serving cell and the first neighbor cell by the core network, and one or both of the serving cell and the first neighbor cell are further configured to provide feedback to the core network indicating that one or both of the serving cell and the first neighbor perform configurations based on the beam directions and sending times of the plurality of transmit beams notified or suggested by the core network.

62. The apparatus according to any one of claims 52 to 61, wherein:

if a number of transmit beams corresponding to the first neighbor cell is N times a number of transmit beams corresponding to the serving cell, wherein $N \geq 1$, a beam direction of a transmit beam of the first neighbor cell on an $i^{th}$ time unit is related to a beam direction of a transmit beam of the serving cell on a $floor(i/N)^{th}$ time unit; or

if the number of transmit beams corresponding to the serving cell is N times the number of transmit beams corresponding to the first neighbor cell, wherein $N \geq 1$, the beam direction of the transmit beam of the first neighbor cell on the $i^{th}$ time unit is related to a beam direction of a transmit beam of the serving cell on an $i*N^{th}$ time unit.

63. The apparatus according to claim 62, wherein the number of transmit beams corresponding to the first neighbor cell is N times the number of transmit beams corresponding to the serving cell, wherein $N \geq 1$, and the beam direction of the transmit beam of the first neighbor cell on the $i^{th}$ time unit satisfies:

$$angle[floor(i/N)]+\{angle[floor(i/N)+1]-angle[floor(i/N)]\}/N*mod(i,N);$$

wherein angle(j) represents an angle of a beam direction of the serving cell on a $j^{th}$ time unit, and mod represents a modulus operation.

64. The apparatus according to any one of claims 52 to 63, wherein the first neighbor cell is any one of a plurality of neighbor cells corresponding to the terminal device, the serving cell and the plurality of neighbor cells are configured to determine a first valid region corresponding to the terminal device, and the first information further includes a maximum transmit beam number corresponding to the first valid region.

65. The apparatus according to claim 64, wherein a plurality of cells in the first valid region configure, via a core network, parameters for the plurality of cells to perform transmit beam sweeping.

66. The apparatus according to any one of claims 52 to 65, wherein the plurality of transmit beams corresponding to one or both of the serving cell and the first neighbor cell are used to carry synchronization signal blocks, SSBs.

67. An apparatus for communication, comprising a memory and a processor, wherein the memory is configured to store a program, and the processor is configured to invoke the program in the memory to perform the method according to any one of claims 1 to 33.

68. An apparatus, comprising a processor, wherein the processor is configured to invoke a program from a memory to perform the method according to any one of claims 1 to 33.

69. A chip, comprising a processor, wherein the processor is configured to invoke a program from a memory to cause a device on which the chip is installed to perform the method according to any one of claims 1 to 33.

70. A computer-readable storage medium storing a program, wherein the program causes a computer to perform the method according to any one of claims 1 to 33.

71. A computer program product, comprising a program, wherein the program causes a computer to perform the method according to any one of claims 1 to 33.

72. A computer program, wherein the computer program causes a computer to perform the method according to any one of claims 1 to 33.

**100**

110

120    120

FIG. 1

S202    S204    S206    S208    S210

| generate SSB | → | transmit end beam sweeping | → | propagation channel | → | Gaussian additive white noise channel | → | receive end beam sweeping |

| form a beam pair | ← | beam detection | ← | beam measurement | ← | OFDM demodulation | ← | time synchronization |

S220    S218    S216    S214    S212

FIG. 2

| gNB | S1 | S2 | S3 | S4 | S1 | S2 | **S3** | S4 | S1 | S2 | S3 | S4 | S1 | S2 | S3 | S4 | |
|-----|----|----|----|----|----|----|----|----|----|----|----|----|----|----|----|----|---|
| UE | | U1 | | | | **U2** | | | | U3 | | | | U4 | | | t |

FIG. 3

FIG. 4

FIG. 5

FIG. 6

FIG. 7

FIG. 8

## INTERNATIONAL SEARCH REPORT

| International application No. |
| --- |
| **PCT/CN2023/098185** |

### A.  CLASSIFICATION OF SUBJECT MATTER

H04W 16/28(2009.01)i

According to International Patent Classification (IPC) or to both national classification and IPC

### B.  FIELDS SEARCHED

Minimum documentation searched (classification system followed by classification symbols)

IPC: H04W H04Q

Documentation searched other than minimum documentation to the extent that such documents are included in the fields searched

Electronic data base consulted during the international search (name of data base and, where practicable, search terms used)

CNTXT, ENTXTC, VCN, VEN, 3GPP: 服务小区, 邻区, 波束扫描, 波束上报, 接收, 发射, 发送, 偏移值, 时间单元, 同步, serving cell, neighborhood cell, beam sweeping, beam reporting, reception, transmission, offset value, time unit, synchronization, SSB

### C.  DOCUMENTS CONSIDERED TO BE RELEVANT

| Category* | Citation of document, with indication, where appropriate, of the relevant passages | Relevant to claim No. |
| --- | --- | --- |
| Y | WO 2022099660 A1 (HUAWEI TECHNOLOGIES CO., LTD.) 19 May 2022 (2022-05-19) claims 1-4, and description, paragraphs 62-93 | 1-72 |
| Y | US 2013237218 A1 (SAMSUNG ELECTRONICS CO., LTD.) 12 September 2013 (2013-09-12) claims 1-3 | 1-72 |
| A | CN 113544978 A (BEIJING XIAOMI MOBILE SOFTWARE CO., LTD.) 22 October 2021 (2021-10-22) entire document | 1-72 |
| A | WO 2019047808 A1 (HUAWEI TECHNOLOGIES CO., LTD.) 14 March 2019 (2019-03-14) entire document | 1-72 |
| A | WO 2023010459 A1 (GUANGDONG OPPO MOBILE TELECOMMUNICATIONS CORP., LTD.) 09 February 2023 (2023-02-09) entire document | 1-72 |
| A | WO 2023061166 A1 (HUAWEI TECHNOLOGIES CO., LTD.) 20 April 2023 (2023-04-20) entire document | 1-72 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 August 2023** | **21 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/098185** |

**C. DOCUMENTS CONSIDERED TO BE RELEVANT**

| Category* | Citation of document, with indication, where appropriate, of the relevant passages | Relevant to claim No. |
|---|---|---|
| A | SAMSUNG. "The Impact of Beam Sweeping on RRM Measurement" *3GPP TSG RAN WG2 Meeting #100, Tdoc, R2-1713846*, 01 December 2017 (2017-12-01), entire document | 1-72 |

Form PCT/ISA/210 (second sheet) (July 2022)

## INTERNATIONAL SEARCH REPORT
### Information on patent family members

International application No.

**PCT/CN2023/098185**

| Patent document cited in search report | | | Publication date (day/month/year) | Patent family member(s) | | | Publication date (day/month/year) |
|---|---|---|---|---|---|---|---|
| WO | 2022099660 | A1 | 19 May 2022 | None | | | |
| US | 2013237218 | A1 | 12 September 2013 | KR | 20130103443 | A | 23 September 2013 |
|    |            |    |                   | WO | 2013133669 | A1 | 12 September 2013 |
| CN | 113544978 | A | 22 October 2021 | WO | 2021163852 | A1 | 26 August 2021 |
|    |            |    |                   | US | 2023095649 | A1 | 30 March 2023 |
| WO | 2019047808 | A1 | 14 March 2019 | CN | 109462425 | A | 12 March 2019 |
| WO | 2023010459 | A1 | 09 February 2023 | None | | | |
| WO | 2023061166 | A1 | 20 April 2023 | None | | | |

Form PCT/ISA/210 (patent family annex) (July 2022)